# EUROPEAN PATENT SPECIFICATION

(11) **EP 1 179 510 B1**
(45) Date of publication and mention of the grant of the patent: **03.05.2006**
(21) Application number: 01118660.8
(22) Date of filing: 02.08.2001
(51) Int. Cl.: C03B 9/16

(54) **Assembly for actuating gripping members on a glassware molding machine**
Vorrichtung zum Bewegen der Zangen in eine Maschine zur Herstellung von Glaswaren
Assemblage pour faire marcher les pinces dans une machine de moulage de verre

(30) Priority: 08.08.2000 IT TO000791
(43) Date of publication of application: 13.02.2002
(73) Proprietor: BOTTERO S.p.A., 12010 Cuneo (IT)
(72) Inventor: Armando, Lorenzo, 12100 Cuneo (IT); Borsarelli, GianClaudio, 12100 Cuneo (IT); Sesia, Carlo, 12100 Cuneo (IT)
(74) Representative: Franzolin, Luigi

(56) References cited:
- EP-A- 0 365 718
- US-A- 3 233 999
- US-A- 3 573 027

## Description

The present invention relates to an assembly for actuating gripping members on a glassware molding machine, in particular a so-called I.S. machine.

As is known, an I.S. machine comprises a number of molding sections, each in turn comprising a rough mold, a finish mold, and an inverter unit, normally known as neck-ring mechanism, for transferring the semifinished articles from the rough mold to the finish mold.

Known inverter units normally comprise a splined shaft, which has a longitudinal axis, supports two gripping members or arms for gripping the semifinished article formed in the rough mold, and rotates about the longitudinal axis to rotate the gripping members and turn the semifinished article over into the finish mold.

The gripping members are connected to the splined shaft by respective sleeves, which are aligned along the splined shaft and connected in axially-sliding, angularly-fixed manner to the longitudinal grooves on the shaft. The sleeves and the shaft form part of two single-acting actuators coaxial with the splined shaft and controlled by a pressurized fluid to part the two arms.

In known inverter units of the type described above, it is extremely difficult to obtain a fluidtight connection between the two sleeves and the splined shaft, and even more difficult to maintain the original connection, owing to inevitable wear of the various parts in relative motion, and to the resulting increase in slack which, in most cases, is already present at the installation stage.

The slack and poor fluidtight sealing of the actuators tend to result in positioning errors when mating and parting the gripping members, and in fairly sluggish response times in the movement of the sleeves, so that, when both gripping the semifinished article and inserting the semifinished article into the finish mold, the glass is subject to damage, thus impairing the quality of the finished product.

Moreover, the gripping members are sometimes, albeit slightly, misaligned angularly, owing to assembly errors or to inaccuracies or tolerances in the machining of the connections between the sleeves and the splined shaft. However slight, any misalignment of the gripping members obviously results in less than perfect gripping, and hence in possible damage, of the semifinished articles.

It is an object of the present invention to provide an assembly for actuating gripping members on a glassware molding machine, designed to provide a straightforward, low-cost solution to the above problems.

According to the present invention, there is provided an assembly for actuating gripping members on a glassware molding machine; the assembly comprising:
- a shaft connected to said molding machine so as to rotate about a longitudinal axis and to be rotated about said longitudinal axis;
- two slide members connected to said shaft in axially-sliding manner and each supporting a respective gripping member;
- actuating means for moving said slide members axially along said shaft; and
- angular connecting means interposed between said slide members and said shaft to keep the slide members in fixed angular positions about said longitudinal axis with respect to said shaft;
characterized in that said shaft is defined externally by a smooth cylindrical surface; and in that said angular connecting means comprise, for each said slide member, at least one elongated member distinct from said shaft, parallel to said longitudinal axis, and carried in angularly fixed position by the shaft.

A non-limiting embodiment of the invention will be described by way of example with reference to the accompanying drawings, in which:
- Figure 1 shows a plan view of a preferred embodiment of the actuating assembly according to the present invention;
- Figure 2 shows a larger-scale section, with parts removed for clarity, along line II-II in Figure 1;
- Figure 3 shows a section, with parts removed for clarity, along line III-III in Figure 2.

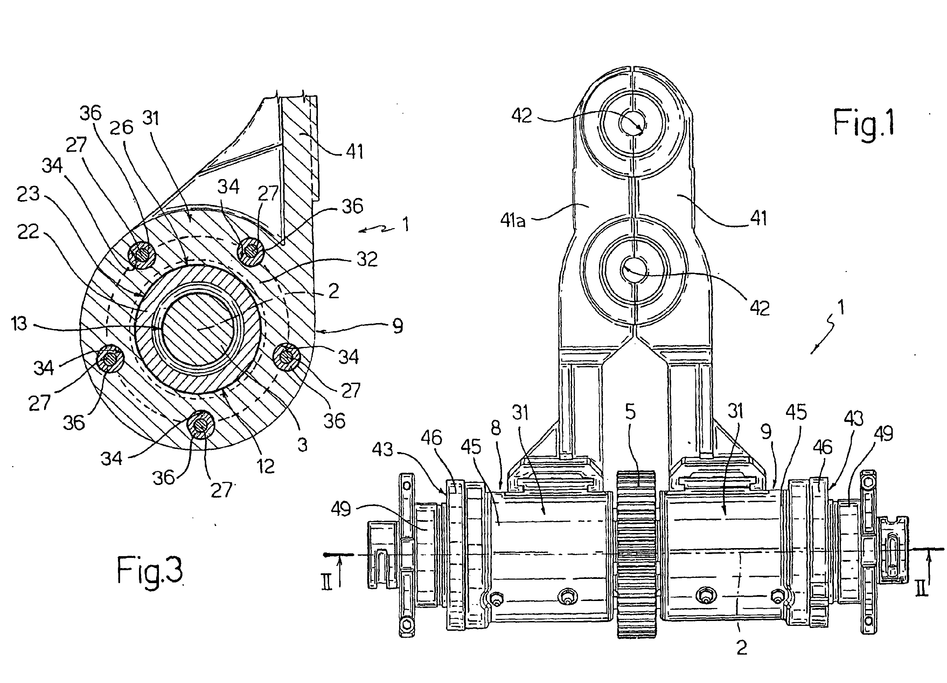

Number 1 in Figure 1 indicates an assembly for actuating gripping members (described in detail later on) generally known as neck-ring mechanism and used on a glassware molding machine (not shown), in particular a so-called I.S. machine, to transfer glass articles from a rough mold to a finish mold on the machine.

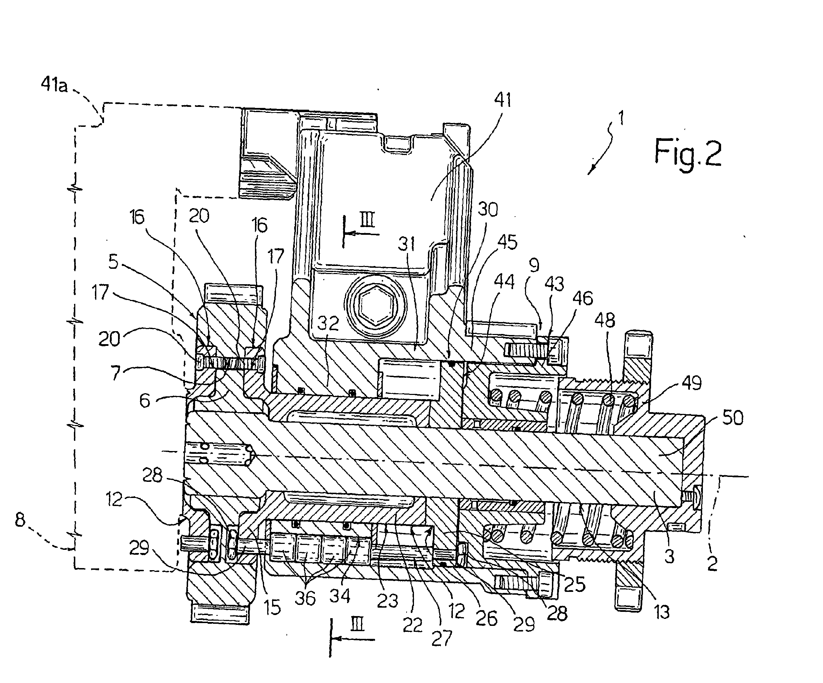

With reference to Figures 1 and 2, assembly 1 extends along a longitudinal axis 2 and is fitted to a fixed supporting structure (not shown) of the I.S. machine to rotate about axis 2, which, in use, is horizontal. Assembly 1 comprises a shaft 3 coaxial with axis 2 and fitted, in an intermediate position, with an externally toothed gear 5 forming part of a transmission interposed between shaft 3 and a relative actuator (not shown) to rotate shaft 3 about axis 2.

Gear 5 comprises an intermediate annular portion 6 having a number of equally spaced threaded through holes 7 (only one shown) parallel to axis 2, and axially separates two subassemblies 8 and 9 of assembly 1, which are fitted to shaft 3 and symmetrical with respect to a plane perpendicular to axis 2 and through gear 5. The following description refers to subassembly 9 shown in Figure 2, it being understood that the same considerations also apply to subassembly 8. Subassembly 9 comprises a tubular body 12, which is fitted to a cylindrical surface 13 radially defining shaft 3, is coaxial with shaft 3, and comprises an end flange 15 resting axially on gear 5 and fixed to gear 5 by a connecting assembly 16. Assembly 16 comprises holes 7; a number of through holes 17 formed in flange 15 and each coaxial with a respective hole 7; and a number of externally threaded screws or pins 20, each of which has an outside diameter approximately equal to but no larger than the inside diameter of holes 17, engages a respective pair of holes 7, 17, and is screwed inside hole 7.

With reference to Figure 2, body 12 also comprises an end sleeve 22, which is integral with flange 15, extends on the opposite axial side of flange 15 to gear 5, and is defined radially by a cylindrical outer surface 23.

On the opposite axial side of body 12 to gear 5, surface 13 is fitted coaxially with a disk 25 defining, together with flange 15 and surface 23, an annular seat 26.

With reference to Figures 2 and 3, disk 25 is connected integrally to body 12 by a number of, in particular five, rods 27, which are parallel to and equally spaced angularly about axis 2, extend through flange 15 and disk 25, and are connected to flange 15 and disk 25 by nuts or nut screws 28 screwed to respective threaded end portion 29 of rods 27 to grip disk 25 axially against body 12.

Disk 25 is defined radially by a cylindrical outer surface 30, which is fitted in axially-sliding and fluidtight manner with a sleeve 31 coaxial with shaft 3 and aligned axially with sleeve 31 of subassembly 8.

Sleeve 31 comprises an annular portion 32, which engages seat 26, is supported by sleeve 22, is connected in fluidtight and axially-sliding manner to surface 23, and comprises a number of cylindrical longitudinal through holes 34. Each hole 34 is engaged by a respective rod 27, and houses a number of bushes 36, which are preferably made of antifriction material, are fitted side by side and in fixed positions inside relative hole 34, are fitted through with relative rod 27, and are fitted in sliding manner to rod 27 with substantially no angular slack about axis 2. More specifically, bushes 36 are push fitted inside relative hole 34 so they can be extracted from hole 34 and replaced when worn.

With reference to the accompanying drawings, sleeve 31 is fitted integrally with a projecting radial arm 41 facing the arm 41a (shown partly by the dash line in Figure 2) fitted to sleeve 31 of subassembly 8. Arms 41, 41a are designed to mate axially to clamp the top portions of two semifinished glass articles (not shown) inside respective seats 42 defined by arms 41, 41a.

As shown in Figure 2, the axial movement of the two arms 41, 41a is controlled by respective single-acting actuators 43, each of which comprises a control chamber 44 defined radially by surface 13 and by a jacket 45 forming part of sleeve 31, and axially by disk 25 and by a tubular cup-shaped member 46, which is located on the opposite axial side of disk 25 to body 12, is connected integrally to jacket 45, and is fitted in fluidtight and axially-sliding manner to surface 13.

Member 46 is moved by the opposing action of the pressure of a work fluid fed, in use, into chamber 44 in known manner not shown, and of the elastic force of a preloaded spring 48 interposed between member 46 and an axial shoulder 49 connected integrally in known manner to an end portion 50 of shaft 3.

To assemble assembly 1, each subassembly 8, 9 is preassembled by first fitting sleeve 31 to surface 23; then fitting disk 25 to body 12 by inserting rods 27 inside holes 34 and locking rods 27 by means of nut screws 28: and, finally, connecting member 46 integrally to sleeve 31 to define part of chamber 44. The preassembled subassemblies 8, 9 are then fitted to surface 13 and fixed to gear 5 by assemblies 16; springs 48 are fitted about shaft 3; and shoulders 49 are fitted to portions 50.

When assembling or adjusting assembly 1, the relative angular position of the two subassemblies 8 and 9 about axis 2 can be adjusted accurately by means of connecting assemblies 16 to eliminate any relatively slight angular misalignment of arms 41, 41a. To do so, the pins 20 of one of subassemblies 8, 9 are loosened from respective holes 7, and flange 15 is moved into the correct angular position by rotating the relative subassembly 8, 9 about axis 2 to align arms 41, 41a using the slack between holes 17 and pins 20. Once the adjustment is made, pins 20 are tightened back inside respective holes 7 to secure flange 15 to gear 5.

In actual use, the connection between rods 27, integral with relative body 12, and bushes 36, integral with each sleeve 31, keeps sleeve 31 in a fixed angular position about axis 2 with respective to relative body 12 and, therefore, to shaft 3, while at the same time allowing sleeve 31 to slide axially to and from gear 5 when relative actuator 43 is operated.

Assembly 1 as described and illustrated therefore provides, in an effective, straightforward manner, for ensuring fluidtight sealing of chamber 44, in particular about shaft 3, by virtue of the seals mating with smooth cylindrical surfaces 13, 23, 30, while at the same time ensuring angular connection of sleeves 31 and shaft 3 by means of rods 27.

Using, for each sleeve 31, a number of angular connecting rods 27 parallel to axis 2 reduces slack and so ensures a relatively high degree of precision in the axial slide and in the positioning of each sleeve 31.

The surface of each bush 36 sliding on relative rod 27 extends longitudinally to a fairly considerable length, thus preventing any jamming during the sliding movement of sleeve 31.

Forming rods 27 in two distinct or separate sets, each associated with a relative sleeve 31, enables subassemblies 8, 9 to be fitted separately to shaft 3, and the angular position of one subassembly 8, 9 to be adjusted accurately with respect to the other about axis 2.

What is more, bodies 12, interposed between shaft 3 and relative sleeves 31, enable fast, easy, accurate preassembly of subassemblies 8 and 9 with no interference from gear 5 or shaft 3.

Clearly, changes may be made to assembly 1 as described herein without, however, departing from the scope of the present invention.

In particular, fine adjustment of the angular position of bodies 12 with respect to shaft 3 may be effected otherwise than as described.

Sleeves 31 may be fitted directly to surface 13, with no bodies 12 in between, so that the component parts of assembly 1 are fitted directly to shaft 3.

Finally, the number of rods 27 may be other than as indicated; rods 27 may be replaced by other elongated members and/or may be connected to sleeves 31 and shaft 3 otherwise than as described by way of example.

## Claims

1. An assembly (1) for actuating gripping members (41) on a glassware molding machine; the assembly comprising:
- a shaft (3) connected to said molding machine so as to rotate about a longitudinal axis (2) and to be rotated about said longitudinal axis (2);
- two slide members (31) connected to said shaft (3) in axially-sliding manner and each supporting a respective gripping member (41);
- actuating means (43) for moving said slide members (31) axially along said shaft (3); and
- angular connecting means (27,36) interposed between said slide members (31) and said shaft (3) to keep the slide members (31) in fixed angular positions about said longitudinal axis (2) with respect to said shaft (3);
**characterized in that** said shaft (3) is defined externally by a smooth cylindrical surface (13); and **in that** said angular connecting means (27, 36) comprise, for each said slide member (31), at least one elongated member (27) distinct from said shaft (3), parallel to said longitudinal axis (2), and carried in angularly fixed position by the shaft (3).

2. An assembly as claimed in Claim 1, **characterized in that** said angular connecting means (27, 36) comprise a number of said elongated members for each said slide member (31).

3. An assembly as claimed in Claim 2, **characterized in that** said elongated members (27) in each said number are equally spaced angularly about said longitudinal axis (2).

4. An assembly as claimed in Claim 2 or 3, **characterized in that** the two said numbers of elongated members (27) are defined by respective numbers of rods (27).

5. An assembly as claimed in Claim 4, **characterized in that** the two said numbers of rods (27) are distinct from each other.

6. An assembly as claimed in Claim 5, **characterized in that** said rods (27) are fitted in fixed positions with respect to said shaft (3) and in sliding manner to the relative said slide member (31).

7. An assembly as claimed in any one of Claims 4 to 6, **characterized in that** said angular connecting means (27, 36) comprise at least one sliding shoe (36) carried by each said slide member (31) and connected in sliding manner to a relative said rod (27).

8. An assembly as claimed in any one of Claims 4 to 7, **characterized in that** said rods (27) in each said number extend through the relative said slide member (31).

9. An assembly as claimed in any one of Claims 4 to 8, **characterized by** comprising two preassembled subassemblies (8)(9) fitted to said smooth cylindrical surface (13) and each comprising a respective said slide member (31); connecting means (16) being provided to connect each said subassembly (8)(9) integrally to said shaft (3).

10. An assembly as claimed in Claim 9, **characterized in that** each said subassembly (8)(9) comprises a tubular intermediate body (12) interposed between the relative said slide member (31) and said shaft (3); each said number of rods (27) being connected integrally to the relative said intermediate body (12).

11. An assembly as claimed in Claim 10, **characterized in that** said actuating means (43) comprise, for each said intermediate body (12), a control chamber (44) defined by said smooth cylindrical surface (13) and by a platelike annular member (25) coaxial with the relative said intermediate body (12) and gripped axially against the intermediate body (12) by the relative said number of rods (27).

12. An assembly as claimed in Claim 11, **characterized in that** each said intermediate body (12) and the relative said annular member (25) define an outer annular seat (26); each said slide member (31) comprising an annular portion (32) engaging said annular seat (26) in axially-sliding manner.

13. An assembly as claimed in Claim 12, **characterized in that** each said annular portion (32) is connected in fluidtight manner to the relative said intermediate body (12) in said annular seat (26).

14. An assembly as claimed in any one of the foregoing Claims, **characterized by** comprising fine-adjustment means (16) interposed between said shaft (3) and at least one said number of rods (27) to accurately adjust the angular position of one of said slide members (31) with respect to the other slide member (31) about said longitudinal axis (2).

15. An assembly as claimed in Claims 10 and 14, **characterized in that** said fine-adjustment means (16) comprise at least one first hole (7) carried by said shaft (3); at least one second hole (17) carried by said intermediate body (12) and coaxial with said first hole (7); and at least one pin (20) engaging said first and said second hole (7) (17) and having an outside diameter approximately equal to but no larger than the inside diameter of one (7) of the first and second holes (7)(17).

16. An assembly as claimed in Claim 15, **characterized in that** said fine-adjustment means (16) form part of said connecting means (16).

17. An assembly as claimed in Claim 16, **characterized in that** said connecting means (16) comprise, for each said pin (20), a threaded connection interposed between said shaft (3) and the relative said intermediate body (12).

## Patentansprüche

1. Einrichtung (1) zum Betätigen von Greifteilen (41) einer Glaspressmaschine, wobei die Einrichtung über
- einen mit der Pressmaschine verbundenen Schaft (3) zum selbsttätigen Drehen um eine Längsachse (2) und zum angetriebenen Drehen um die Längsachse (2), über
- zwei Schlittenteile (31), die in axialer Richtung verschieblich mit dem Schaft (3) verbunden sind und jeweils ein zugeordnetes Greifteil (41) tragen, über
- Betätigungsmittel (43) zum Bewegen der Schlittenteile (31) in axialer Richtung entlang des Schafts (3) und über
- Winkelverbindungsmittel (27, 36) verfügt, die zwischen den Schlittenteilen (31) und dem Schaft (3) angeordnet sind, um die Schlittenteile (31) in festgelegten Winkelstellungen um die Längsachse (2) mit Bezug auf den Schaft (3) zu halten,
**dadurch gekennzeichnet, dass** der Schaft (3) außenseitig durch eine glatte zylindrische Oberfläche (13) gebildet ist und dass die Winkelverbindungsmittel (27, 36) für jedes Schlittenteil (31) über wenigstens ein längliches Teil (27) verfügen, das von dem Schaft (3) verschieden, parallel zu der Längsachse (2) ausgerichtet und in einer winklig festgelegten Stellung durch den Schaft (3) getragen ist.

2. Einrichtung nach Anspruch 1, **dadurch gekennzeichnet, dass** die Winkelverbindungsmittel (27, 36) für jedes Schlittenteil (31) über eine Anzahl von länglichen Teilen verfügt.

3. Einrichtung nach Anspruch 2, **dadurch gekennzeichnet, dass** die länglichen Teile (27) bei jeder Anzahl winkelmäßig gleichmäßig beabstandet um die Längsachse (2) angeordnet sind.

4. Einrichtung nach Anspruch 2 oder 3, **dadurch gekennzeichnet, dass** die beiden anzahlmäßigen Gruppen von länglichen Teilen (27) durch eine zugeordnete Anzahl von Stangen (27) gebildet sind.

5. Einrichtung nach Anspruch 4, **dadurch gekennzeichnet, dass** die beiden anzahlmäßigen Gruppen von Stangen (27) voneinander verschieden sind.

6. Einrichtung nach Anspruch 5, **dadurch gekennzeichnet, dass** die Stangen (27) in festgelegten Stellungen in Bezug auf den Schaft (3) eingepasst und in Bezug auf das Schlittenteil (31) verschieblich sind

7. Einrichtung nach einem der Ansprüche 4 bis 6, **dadurch gekennzeichnet, dass** die Winkelverbindungsmittel (27, 36) wenigstens einen Gleitschuh (36) aufweisen, der durch jedes Schlittenteil (31) getragen und verschieblich mit einer zugehörigen Stange (27) verbunden ist.

8. Einrichtung nach einem der Ansprüche 4 bis 7, **dadurch gekennzeichnet, dass** sich die Stangen (27) jeder anzahlmäßigen Gruppe durch das jeweils zugehörige Schlittenteil (31) erstrecken.

9. Einrichtung nach einem der Ansprüche 4 bis 8, **gekennzeichnet durch** das Vorhandensein von zwei vormontierten Untereinrichtungen, die an die glatte zylindrische Oberfläche (13) angepasst sind und jeweils ein zugehöriges Schlittenteil (31) aufweisen, wobei Verbindungsmittel (16) vorhanden sind, um jede Untereinrichtung (8)(9) fest mit dem Schaft (3) zu verbinden.

10. Einrichtung nach Anspruch 9, **dadurch gekennzeichnet, dass** jede Untereinheit (8)(9) über einen rohrartigen Zwischenkörper (12) verfügt, der zwischen dem zugehörigen Schlittenteil (31) und dem Schaft (3) angeordnet ist, wobei jede anzahlmäßige Gruppe von Stangen (27) fest mit dem zugehörigen Zwischenkörper (12) verbunden ist.

11. Einrichtung nach Anspruch 10, **dadurch gekennzeichnet, dass** die Betätigungsmittel (43) für jeden Zwischenkörper (12) über eine Kontrollkammer (44) verfügen, die durch die glatte zylindrische Oberfläche (13) und ein plattenartiges Scheibenteil (25) gebildet ist, das koaxial mit dem zugehörigen Zwischenkörper (12) ausgerichtet und durch die zugehörige anzahlmäßige Gruppe von Stangen (27) axial gegen den Zwischenkörper (12) festgelegt ist.

12. Einrichtung nach Anspruch 11, **dadurch gekennzeichnet, dass** jeder Zwischenkörper (12) und das zugehörige Scheibenteil (25) einen äußeren ringförmigen Sitz (26) bilden, wobei jedes Schlittenteil (31) über einen ringförmigen Abschnitt (32) verfügt, der mit dem scheibenförmigen Sitz (26) axial verschieblich in Eingriff ist.

13. Einrichtung nach Anspruch 12, **dadurch gekennzeichnet, dass** der ringförmige Abschnitt (32) fluidmäßig abgedichtet mit dem zugehörigen Zwischenkörper (12) und dem scheibenförmigen Sitz (26) verbunden ist.

14. Einrichtung nach einem der vorangehenden Ansprüche, **dadurch gekennzeichnet, dass** Feineinstellmittel (16) vorhanden sind, die zwischen dem Schaft (3) und wenigstens einer anzahlmäßigen Gruppe von Stangen (27) angeordnet sind, um die winkelmäßige Stellung jedes Schlittenteils (31) in Bezug auf ein anderes Schlittenteil (31) um die Längsachse (2) einzustellen.

15. Einrichtung nach Anspruch 10 und 14, **dadurch gekennzeichnet, dass** die Feineinstellmittel (16) über wenigstens ein von dem Schaft (3) getragenes erstes Loch (7), über wenigstens ein durch den Zwischenkörper (12) getragenes und koaxial zu dem ersten Loch (7) ausgerichtetes zweites Loch (17) und über wenigstens einen Stift (20) verfügen, der mit dem ersten Loch (7) und dem zweiten Loch (17) in Eingriff ist und einen Außendurchmesser aufweist, der im Wesentlichen gleich, jedoch nicht größer als der Innendurchmesser eines der ersten oder zweiten Löcher (7)(17) ist.

16. Einrichtung nach Anspruch 15, **dadurch gekennzeichnet, dass** die Feineinstellmittel (16) ein Teil der Verbindungsmittel (16) sind.

17. Einrichtung nach Anspruch 16, **dadurch gekennzeichnet, dass** die Verbindungsmittel (16) für jeden Stift (20) eine mit einem Gewinde versehene Verbindung aufweisen, die zwischen dem Schaft (13) und dem zugehörigen Zwischenkörper (12) angeordnet ist.

## Revendications

1. Structure (1) pour actionner des organes de saisie (41) sur une machine de moulage d'articles de verrerie ; cette structure comprenant :
- un arbre (3) relié à ladite machine de moulage de façon à tourner autour d'un axe longitudinal (2) et être tourné autour dudit axe longitudinal (2) ;
- deux organes de coulisseau (31) reliés audit arbre (3) de manière à coulisser axialement et chacun supportant un organe de saisie respectif (41) ;
- un moyen d'actionnement (43) pour déplacer lesdits organes de coulisseau (31) axialement le long dudit arbre (3) ; et
- des moyens de liaison angulaires (27, 36) intercalés entre lesdits organes de coulisseau (31) et ledit arbre (3) pour maintenir les organes de coulisseau (31) dans des positions angulaires fixes autour dudit axe longitudinal (2) par rapport audit arbre (3) ;
**caractérisée en ce que** ledit arbre (3) est défini extérieurement par une surface cylindrique lisse (13) ; et **en ce que** lesdits moyens de liaison angulaires (27, 36) comprennent, pour chacun desdits organes de coulisseau (31), au moins un organe allongé (27) distinct dudit arbre (3), parallèle audit axe longitudinal (2), et porté dans une position fixe angulaire par l'arbre (3).

2. Structure selon la revendication 1, **caractérisée en ce que** lesdits moyens de liaison angulaires (27, 36) comprennent un certain nombre desdits organes allongés pour chacun desdits organes de coulisseau (31) .

3. Structure selon la revendication 2, **caractérisée en ce que** lesdits organes allongés (27) dans chacun desdits nombres sont espacés à intervalles réguliers d'une manière angulaire autour dudit axe longitudinal (2).

4. Structure selon la revendication 2 ou 3, **caractérisée en ce que** lesdits deux nombres d'organes allongés (27) sont définis par des nombres respectifs de tiges (27).

5. Structure selon la revendication 4, **caractérisée en ce que** lesdits deux nombres de tiges (27) sont distincts l'un de l'autre.

6. Structure selon la revendication 5, **caractérisée en ce que** lesdites tiges (27) sont fixées dans des positions fixes par rapport audit arbre (3) et d'une manière coulissante par rapport audit organe de coulisseau relatif (31).

7. Structure selon l'une quelconque des revendications 4 à 6, **caractérisée en ce que** lesdits moyens de liaison angulaires (27, 36) comprennent au moins un patin coulissant (36) porté par chacun desdits organes de coulisseau (31) et relié d'une manière coulissante à une desdites tiges relatives (27).

8. Structure selon l'une quelconque des revendications 4 à 7, **caractérisée en ce que** lesdites tiges (27) dans chacun desdits nombres s'étendent à travers ledit organe de coulisseau relatif (31).

9. Structure selon l'une quelconque des revendications 4 à 8, **caractérisée en ce qu'**elle comprend deux sous-structures préassemblées (8) (9) fixées à ladite surface cylindrique lisse (13) et chacune d'elles comprenant un desdits organes de coulisseau respectifs (31); un moyen de liaison (16) étant prévu pour relier chacune desdites sous-structures (8) (9) solidairement audit arbre (3).

10. Structure selon la revendication 9, **caractérisée en ce que** chacune desdites sous-structures (8) (9) comprend un corps intermédiaire tubulaire (12) intercalé entre ledit organe de coulisseau relatif (31) et ledit arbre (3) ; chacun desdits nombres de tiges (27) étant relié solidairement audit corps intermédiaire relatif (12).

11. Structure selon la revendication 10, **caractérisée en ce que** ledit moyen d'actionnement (43) comprend, pour chacun desdits corps intermédiaires (12), une chambre de commande (44) définie par ladite surface cylindrique lisse (13) et par un organe annulaire en forme de plaque (25) dont l'axe coïncide avec ledit corps intermédiaire relatif (12) et qui est saisi axialement contre le corps intermédiaire (12) par lesdits nombres de tiges relatives (27).

12. Structure selon la revendication 11, **caractérisée en ce que** chacun desdits corps intermédiaires (12) et ledit organe annulaire relatif (25) définissent un siège annulaire externe (26) chacun desdits organes de coulisseau (31) comprenant une portion annulaire (32) se mettant en prise avec ledit siège annulaire (26) de manière à coulisser axialement.

13. Structure selon la revendication 12, **caractérisée en ce que** chacune desdites portions annulaires (32) est reliée d'une manière étanche pour les fluides audit corps intermédiaire relatif (12) dans ledit siège annulaire (26).

14. Structure selon l'une quelconque des revendications précédentes, **caractérisée en ce qu'**elle comprend un moyen de réglage fin (16) intercalé entre ledit arbre (3) et au moins un desdits nombres de tiges (27) pour régler avec précision la position angulaire d'un desdits organes de coulisseau (31) par rapport à l'autre organe de coulisseau (31) autour dudit axe longitudinal (2).

15. Structure selon les revendications 10 et 14, **caractérisée en ce que** ledit moyen de réglage fin (16) comprend au moins un premier trou (7) porté par ledit arbre (3) ; au moins un deuxième trou (17) porté par ledit corps intermédiaire (12) et dont l'axe est coaxial audit premier trou (7) ; et au moins une goupille (20) se mettant en prise avec ledit premier et ledit deuxième trous (7) (17) et dont le diamètre extérieur est à peu près égal sans toutefois être supérieur au diamètre intérieur d'un (7) des premier et deuxième trous (7) (17).

16. Structure selon la revendication 15, **caractérisée en ce que** ledit moyen de réglage fin (16) fait partie dudit moyen de liaison (16).

17. Structure selon la revendication 16, **caractérisée en ce que** ledit moyen de liaison (16) comprend, pour chacune desdites goupilles (20), une liaison filetée intercalée entre ledit arbre (3) et ledit corps intermédiaire relatif (12).
